# EUROPEAN PATENT APPLICATION

(11) **EP 4 541 483 A1**
(43) Date of publication of application: **23.04.2025**
(21) Application number: 23203998.2
(22) Date of filing: 17.10.2023
(51) Int. Cl.: B21J 15/02, B21J 15/04, B21J 15/36, F16B 5/02, F16B 5/04, F16B 19/05, F16B 19/08

(54) **JOINING METHOD, PUNCH RIVET ARRANGEMENT, DIE, AND PUNCH RIVET TOOL**

(71) Applicant: Newfrey LLC, New Britain, CT 06053 (US)
(72) Inventor: Vorderbrüggen, Julian, 35394 Giessen (DE)
(74) Representative: Witte, Weller & Partner Patentanwälte mbB

(57) **Abstract**

A method for joining at least two workpieces (18₁, 18₂) using a punch rivet arrangement (20), the punch rivet arrangement (20) comprising a rivet (22) and a collar (40), wherein the rivet (22) has at least one radial recess (28), comprising the steps of (i) placing the rivet (22) on a first side (16₁) of the workpieces which form a stacked workpiece arrangement (16); (ii) placing the collar (40) on a die (14) arranged on a second side (16₂) of the workpiece arrangement (16), (iii) punching the rivet (22) with a punch force (FP) through the workpiece arrangement (16) in an axial direction (L), wherein the workpiece arrangement (16) is supported by a support surface (46) of the collar (40), and wherein the collar (40) is supported by a first engagement surface (56) the die (14); and (iv) modifying the collar (40) by applying a modification force (FM) to the collar (40), wherein the modification force (FM) is higher than the punch force (FP), and wherein the modification of the collar (40) allows a second engagement surface (58) of the die (14) to apply a radial swaging force (FSr) onto the collar (40) so that material of the collar (40) flows into the at least one radial recess (28) of the rivet (22).

## Description

The present disclosure relates to a method for joining at least two workpieces using a punch rivet arrangement, to such a punch rivet arrangement, to a die for a punch rivet arrangement, and to a punch rivet tool for a punch rivet arrangement.

In the field of joining workpieces, several technologies are known. A first technology is a classical screw/nut joint, wherein a hole is pre-drilled into the workpieces, the screw is inserted and a nut is screwed onto a threaded a shaft of the screw from an opposite axial side of the workpieces.

Also, joining systems are known, wherein a retaining bolt is inserted into a pre-drilled hole of the workpiece arrangement, and a retaining ring is set onto the protruding end of the bolt by a setting tool, which plastically deforms the retaining ring. Typically, material of the retaining ring flows into radial recesses of the bolt. In this connection, it is also known to use classic rivets which are inserted into a pre-drilled hole from one axial side, wherein a protruding end of the rivet on the other axial side is plastically deformed in order to form a so-called rivet connection.

In some cases, it is possible to dispense with the step of pre-drilling a hole to the workpieces. For example, in so-called punch rivet systems, a self-piercing rivet is punched through the workpiece arrangement, and a protruding end is plastically deformed by a die. In some cases, the punch rivets are head-less, wherein a punch and a die press the punch rivet axially so that material of the workpieces is pressed into radial recesses of the punch rivet. Such a punch rivet is for example known from document US 4,978,270 B.

A method for mechanically joining at least two workpieces by means of a punch rivet and a retaining ring is known from document DE 10 2010 000 500 B4.

Document DE 10 2010 000 500 B4 proposes to punch the rivet through the workpieces, so that it is not necessary to pre-drill a hole. As the punching process requires a certain axial punching force, the associated retaining ring must be configured such that it deforms only at a force which is above the punching force. This entails that the punch rivet tools must be configured for providing comparatively high forces. Particularly, in cases where the joints are to be made at locations with limited accessibility, this method is therefore limited.

On the other hand, the classic head-less punch rivets without retaining ring typically have only a comparatively low strength in the axial direction, particularly against head tensile loads. In addition, the strength against head tensile loads is strongly dependent on the material of the workpieces to be joined.

In view of the above, it is an object of the present disclosure, to provide an improved method for joining at least two workpieces, an improved punch rivet arrangement, an improved die for a punch rivet arrangement, and an improved punch rivet tool for a punch rivet arrangement.

The above object is achieved by a method for joining at least two workpieces using a punch rivet arrangement, the punch rivet arrangement comprising a rivet and a collar, wherein the rivet has at least one radial recess, comprising the steps of (i) placing the rivet on a first side of the workpieces which form a stacked workpiece arrangement; (ii) placing the collar on a die arranged on a second side of the workpiece arrangement, (iii) punching the rivet with a punch force through the workpiece arrangement in an axial direction, wherein the workpiece arrangement is supported by a support surface of the collar, and wherein the collar is supported by a first engagement surface the die; and (iv) modifying the collar by applying a modification force to the collar, wherein the modification force is higher than the punch force, and wherein the modification of the collar allows a second engagement surface of the die to apply a radial swaging force onto the collar so that material of the collar flows into the at least one radial recess of the rivet.

Further, the above object is achieved by a punch rivet arrangement, particularly for use in the above method, comprising a rivet and a collar, wherein the rivet comprises a shaft with at least one radial recess, and extends in an axial direction, wherein the collar has a contact surface for contacting a die of a punch rivet tool, wherein the collar has a support surface for supporting a workpiece arrangement, and wherein the collar has a swageable portion, wherein the shaft is configured to be punched through the workpiece arrangement, wherein the collar is configured to receive a part of the shaft, wherein the collar is configured to be modified by applying a modification force to the contact surface, and wherein the swageable portion of the collar is configured to be swaged by a radial swaging force.

In addition, the above object is achieved by a die for the disclosed punch rivet arrangement, wherein the die comprises a radially (perpendicularly or obliquely) extending first engagement surface for engaging a corresponding radially extending contact surface of a collar of the punch rivet arrangement, and a second engagement surface which is arranged axially offset from the first engagement surface and which has a conical or arcuate shape so that the second engagement surface is configured to not engage the contact surface of the collar but to engage another surface of the collar so as to apply a radial swaging force to the collar.

Finally, the above object is achieved by a punch rivet tool for a punch rivet arrangement as disclosed above, comprising a punch and a die as defined above.

The punch rivet arrangement is in principle a two-part arrangement. It includes a rivet and a collar, which are separate elements. The rivet comprises a shaft with at least one radial recess and extends in an axial direction. The second component of the punch rivet arrangement is a collar or retaining ring, which is configured for engaging a part of the shaft and particularly a radial recess thereof. The rivet is configured to be punched through the workpiece arrangement. Therefore, in the disclosed joining method it is not necessary to pre-drill a hole in the workpiece.

The collar has basically two functions. One function is to support the workpiece arrangement during the punching step, whereby the collar is itself supported by a die of the punch rivet tool. It is to be noted here that that the punch rivet tool typically includes a punch and a die that can be moved in an axial direction relative to each other and provide a certain axial force therebetween. In the following description, the die is described as stationary, and the punch is described as axially movable with respect to the die. However, this relation might be reversed, if applicable, or both tool parts can be configured to be axially moveable.

A second function of the collar is its swageability, so that it can be swaged, particularly radially swaged, onto a protruding part of the shaft of the rivet, and particularly into the radial recess thereof.

In the prior art of document DE 10 2010 000 500 B4, the collar (retaining ring) has a dedicated contact surface which is in contact with a single engagement surface of a die, both during the punch riveting step in which the retaining ring supports the workpiece arrangement axially, and during the subsequent deforming step in which the retaining ring is deformed so as to have its material flow into a radial recess of the punch rivet.

In contrast, the present disclosure provides a collar which has a contact surface for supporting a first engagement surface of a die during a punching step. Further, the collar can be modified by a modification force which is higher than a punch force. Due to the modification of the collar, a second engagement surface of the die (which does not contact the collar before its modification) is brought into contact with the collar, so as to apply a radial swaging force (deforming force) onto the collar by means of the second engagement surface.

Therefore, the collar is configured to uncouple the two functions of supporting the workpiece arrangement on the one hand, and of being deformed/swaged for "closing" or setting the collar onto the rivet shaft on the other hand.

The second engagement surface of the die, in any case, does not engage the collar before the collar has been modified.

The modification of the collar may include a bending of a portion like a ring portion. Preferably, however, the modification step includes separating the collar into at least two collar pieces, as will be described in more detail below.

The disclosed joining method can be used in combination with almost any workpieces and workpiece materials, including metals like steel, aluminum, composites, etc. The workpieces are typically sheet of these materials. The material of the rivet and of the collar is typically steel, but might be made by other materials as well.

The radial recess of the rivet is provided typically in an area of a shaft of the rivet which protrudes from the workpiece arrangement after the punching step. The shaft, however, may include additional radial recesses which are located in an axial area of the workpiece arrangement after the punching step, such that material of the workpieces might flow into such additional recesses during the swaging phase. The at least one radial recess may form locking grooves or a locking thread, for example.

In many cases, the collar has a tubular portion and a ring portion which extends radially from the tubular portion, wherein the modification step includes plastically deforming the shape of the ring portion and/or shearing off the ring portion from the tubular portion.

The modification is made at a modification force which is higher than the force necessary for punching the rivet through the workpiece arrangement. Due to the modification, the force necessary for swaging the collar so as to let material of the collar flow into the radial recess of the rivet, can be decreased. The above-mentioned ring portion is typically pressed against a flange portion after having been sheared off from the tubular portion, which exposes the collar to the second engagement surface of the die so as to swage/press collar material radially into the radial recess of the rivet.

The rivet has a shaft, and, preferably, also has a head which is arranged on an opposite side of the collar with respect to the workpiece arrangement. In this case, the joint has a very high strength against head tensile loads which act in the axial direction.

The punch force and the modification force maybe constant forces, but may also be forces that progress and change over the time.

The above object is achieved in full.

In a preferred embodiment, the modification force is applied to the collar via the first engagement surface of the die.

Preferably, the first engagement surface forms an angle with respect to the axial direction in a range between 60° and 120°, and preferably is perpendicular to the axial direction (L).

Typically, the corresponding contact surface of the collar, which is supported by the first engagement surface, does also form an angle with respect to the axial direction in a range between 60° and 120°, and preferably is perpendicular to the axial direction.

In case of the perpendicular first engagement and contact surfaces, the punching step can be conducted without having radial forces act on the collar.

In another preferred embodiment, the second engagement surface of the die is a conical or arcuate surface.

In addition, it is also preferred if the second engagement surface is configured to convert a part of an axial swaging force into the radial swaging force which acts radially on the collar so that material of the collar flows radially into the radial recess of the rivet.

In other words, the second engagement surface which is not in contact with the collar during the punching step, has a conical surface which allows to convert an axial force between the punch and the die to act radially upon the collar material, for swaging same into the rivet recess.

In another preferred embodiment, the rivet has a head and a shaft axially extending from the head and having a smaller diameter than the head, wherein the shaft is punched through the workpiece arrangement, and wherein the at least one radial recess is provided on the shaft.

Preferably, the at least one radial recess is provided on the shaft such that it is exposed to the collar after the punching step. The head typically rests on one of the axial sides of the workpiece arrangement.

Further, the modification of the collar may include a bending, particularly a non-elastic deformation of a part of the collar, particularly of a ring portion thereof.

In a preferred embodiment, however, the modification of the collar by means of the modification force includes separating the collar into two collar pieces.

The separating or severing force (modification force) is higher than the force necessary for supporting the workpieces during the punching step.

The collar can be configured such that the modification force is only slightly higher than the punching force necessary for punching the rivet through the workpiece arrangement.

It is particularly preferred if the collar comprises a tubular portion for receiving a shaft of the rivet, and a ring portion which extends radially from the tubular portion, wherein the modification force is applied to a contact surface of the ring portion so that the ring portion is separated from the tubular portion and is displaced axially on the tubular portion of the remaining collar.

This allows the second engagement surface of the die to engage the collar and swage same.

It is to be understood in the present context, that the collar, in an area of a ring opening for receiving the shaft, includes or forms a first cutting edge for cutting the workpiece arrangement during the punching step, so that a punching slug can be driven through the collar.

On the other hand, the present disclosure includes the modification step of separating a part of the collar from the remaining part of the collar. In this case, the die, which supports the collar, forms or includes a second cutting edge for separating the part (typically the ring portion) from the collar.

It is further preferred if the collar comprises a flange portion which is connected to the tubular portion and which includes a support surface for supporting the workpiece arrangement when being punched through by the rivet, wherein the ring portion is preferably pressed against the flange portion after having been separated from the tubular portion.

However, the deformation/swaging of the collar so that material flows into the radial recess of the rivet, is preferably made before the ring portion contacts the flange portion. Thereby, the deforming force for deforming the collar radially, can be reduced.

It is therefore preferred overall, if the separation of the collar allows the second engagement surface of the die to engage a radially swageable part of the collar.

In the disclosed punch rivet arrangement, it is preferred if the support surface is arranged on one axial side of the of the contact surface, and wherein the swageable portion of the collar is arranged on an opposite axial side of the contact surface.

Further, it is preferred if the collar has a tubular portion extending essentially along the axial direction, and preferably a flange portion extending from the tubular portion, wherein the support surface is preferably formed on the flange portion.

Also, it is preferred if the collar has a tubular portion extending essentially along the axial direction, and a ring portion extending from the tubular portion, wherein the contact surface for contacting the first engagement surface of the die is formed on the ring portion.

As described above, the ring portion is preferably configured to be separated from the tubular portion when a modification force is applied to the contact surface.

After its separation, the ring portion is displaced like a sleeve axially on the tubular portion, so as to allow the second engagement surface of the die to engage a part of the remaining collar.

Also, it is preferred if the collar has a collar inner diameter to which the rivet shaft can be introduced, wherein the tubular portion has a tubular portion diameter (outer diameter), and wherein a ratio of the tubular portion diameter to the collar inner diameter is equal to or smaller than 4, and preferably in the range of 1.5 to 2.5.

The present joining method provides additional safety and increased strength in comparison to classical punch rivet methods. In comparison to punch rivet methods using a retaining ring (DE 10 2010 000 500 B4), the necessary joining force is smaller.

In comparison to classical joining methods using bolts and retaining rings, it is not necessary to pre-drill the workpiece arrangement.

It is understood that the features mentioned above and those yet to be explained below can be used not only in the respective combinations indicated, but also in other combinations or in isolation, without leaving the context of the present invention.

Exemplary embodiments of the invention are shown in the drawings and will be described in more detail hereinafter. In the drawings:
- Fig. 1: is a schematic sectional view of a first embodiment of a punch rivet arrangement in a punch rivet tool;
- Fig. 2: is a schematic sectional view of a punch rivet arrangement in a punch rivet tool at the beginning of a joining process;
- Fig. 3: is a view comparable to Fig. 2, wherein the joining process has been initiated and the workpiece arrangement has been punched through;
- Fig. 4: is a view similar to Fig. 3 and shows a third stage of the joining method, wherein the head of the rivet rests on the workpiece arrangement and wherein a ring portion of a collar is being sheared-off from a tubular portion;
- Fig. 5: is a view similar to Fig. 4 and shows the finalized joint after the collar has been radially deformed and the ring portion has been pressed against a flange portion of the collar;
- Fig. 6: is a detailed view of a finalized joint using the disclosed punch rivet arrangement and shows relative stresses in the collar;
- Fig. 7: is a micrograph of a finalized joint using the disclosed punch rivet arrangement;
- Fig. 8: is a sectional view of another embodiment of a collar of a punch rivet arrangement;
- Fig. 9: is a sectional view of another embodiment of a collar of a punch rivet arrangement;
- Fig. 10: is a sectional view of another embodiment of a collar of a punch rivet arrangement;
- Fig. 11: is a sectional view of another embodiment of a collar of a punch rivet arrangement;
- Fig. 12: is a sectional view of another embodiment of a collar of a punch rivet arrangement;
- Fig. 13: is a sectional view of another embodiment of a collar of a punch rivet arrangement;
- Fig. 14(a): is a sectional view of another embodiment of a rivet of a punch rivet arrangement;
- Fig. 14(b): is a sectional view of another embodiment of a rivet of a punch rivet arrangement;
- Fig. 140: is a sectional view of another embodiment of a rivet of a punch rivet arrangement;

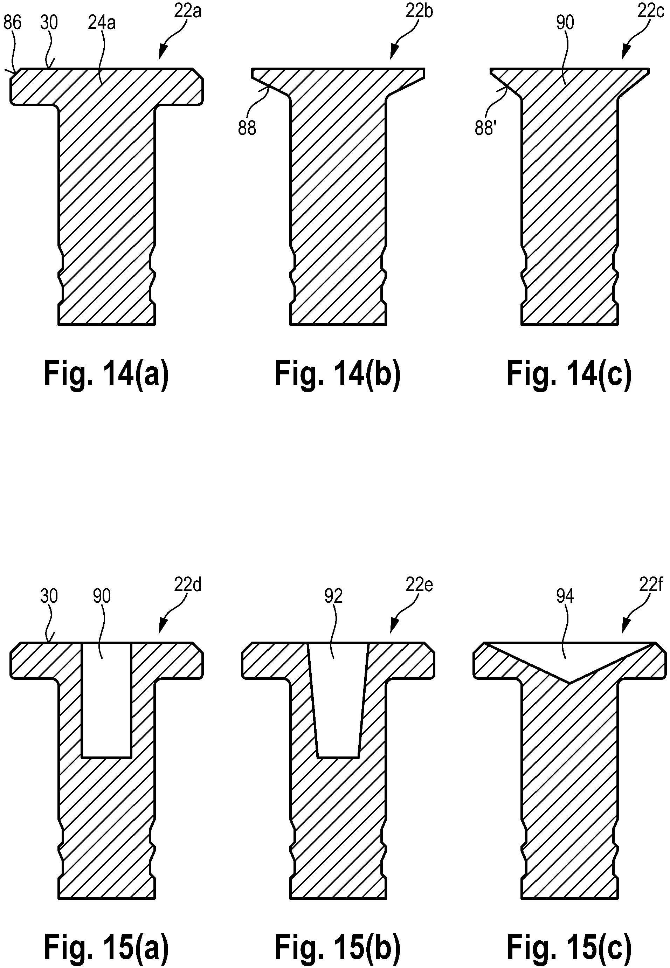

- Fig. 15(a): is a sectional view of another embodiment of a rivet of a punch rivet arrangement;
- Fig. 15(b): is a sectional view of another embodiment of a rivet of a punch rivet arrangement;
- Fig. 15(c): is a sectional view of another embodiment of a rivet of a punch rivet arrangement;

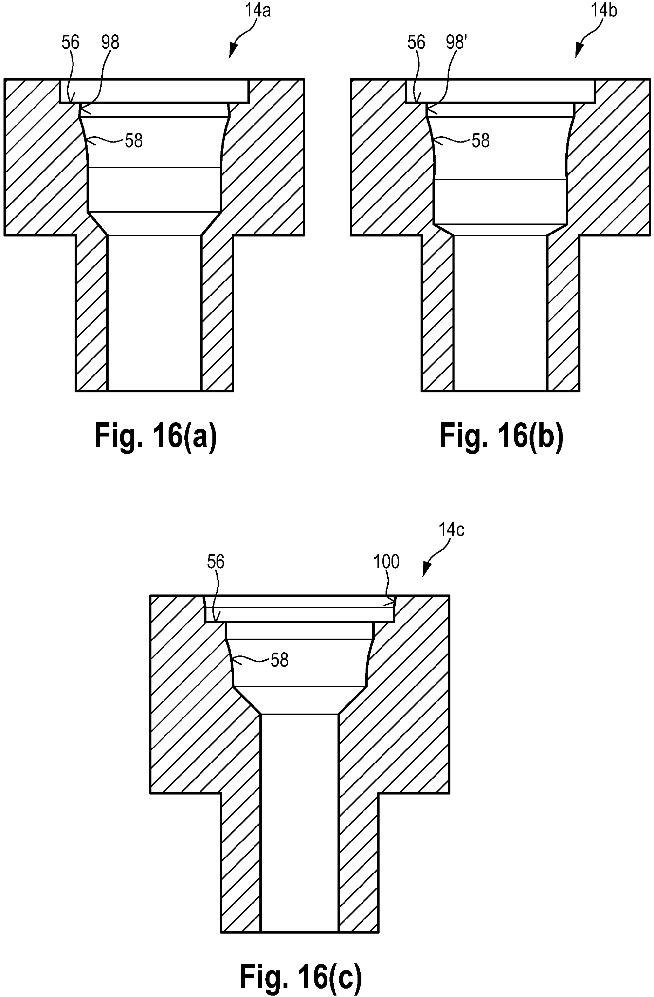

- Fig. 16(a): a sectional view of another embodiment of a die of a punch rivet tool;
- Fig. 16(b): a sectional view of another embodiment of a die of a punch rivet tool;
- Fig. 16(c): a sectional view of another embodiment of a die of a punch rivet tool;

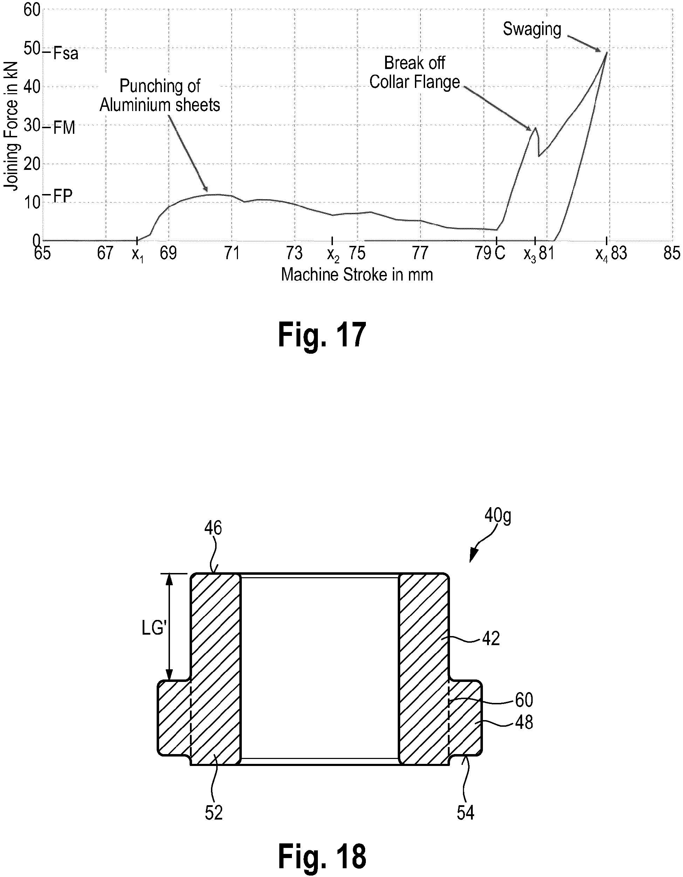

- Fig. 17: a diagram of a joining force versus a machine stroke of a punch rivet tool during a disclosed joining process; and
- Fig. 18: is a sectional view of another embodiment of a collar of a punch rivet arrangement.

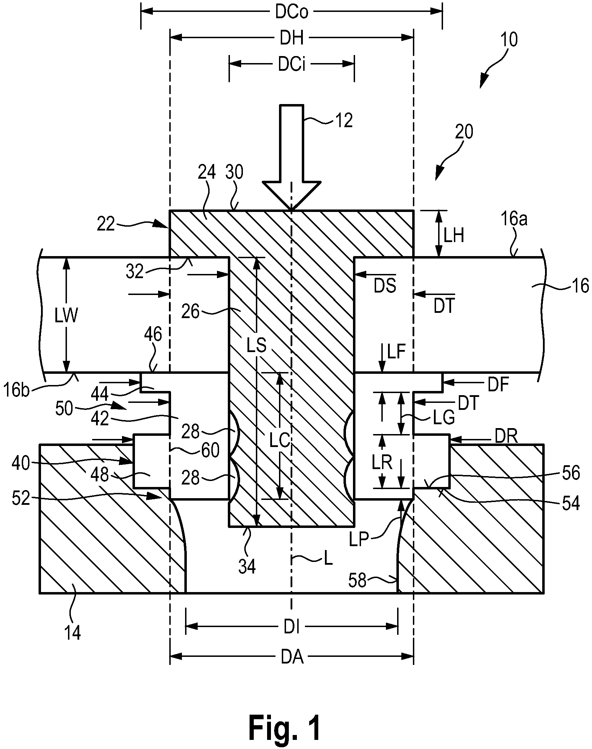

Fig. 1 is a schematic axial sectional view and shows a schematic punch rivet tool 10 which includes a punch 12 and a die 14.

The punch rivet tool 10 is used to conduct a joining process on a workpiece arrangement 16 which has a first axial side 16a and a second axial side 16b. Typically, the workpiece arrangement 16 consists of a number of at least two individual workpieces which are typically workpiece layers or sheets. The workpieces can be made of metal or of a composite material. In a typical application, the workpieces are made of aluminum.

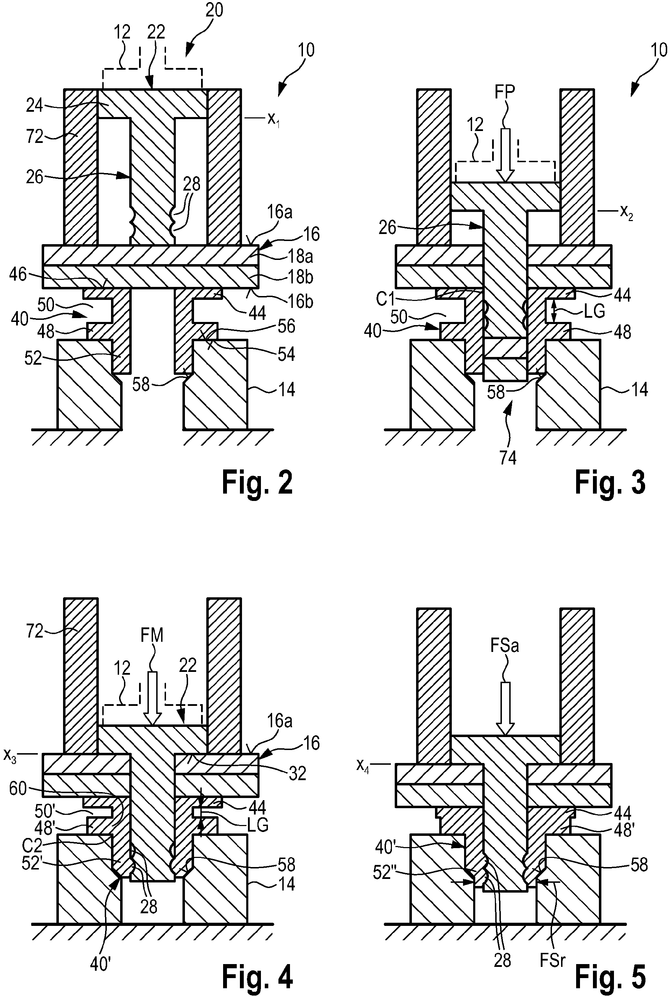

As is shown in Fig. 2, a workpiece arrangement 16 may include individual workpieces 18a, 18b, for example.

In the punch rivet tool 10, the die 14 is typically stationary, while the punch 12, which is shown in Fig. 1 schematically as an arrow, can be moved in an axial direction L. However, this relation can be reversed, for example.

The punch rivet tool 10 is adapted to conduct a joining process with the aid of a punch rivet arrangement 20. The punch rivet arrangement 20 includes a rivet 22. The rivet 22 has a head 24 and a shaft 26. At least one radial recess is provided on the shaft 26, in the area of an end of the shaft 26 distant from the head 24. The at least one radial recess may form locking grooves or a locking thread.

The head 24 has a head top surface 30 which is typically a flat surface and arranged perpendicular with respect to the longitudinal axis L. The head 24 has a head underside surface 32 which is an annular surface and may be arranged perpendicular to the longitudinal axis L. The head underside surface 32 defines a support surface for contacting the first side 16a of the workpiece arrangement 16. Further, the shaft 26 has a shaft end surface 34 which is typically also a flat surface, or any surface which is adapted to punch the rivet 22 through the workpiece arrangement 16.

The head 24 has an outer head diameter DH. The head 24 has an axial length LH (head length) which is smaller than the outer head diameter DH.

Further, the shaft 26 has an axial length (shaft length) LS which is at least three times larger than the head axial length LH. The shaft 26 has a shaft diameter DS which is smaller than the outer head diameter DH. Particularly, it is preferred if the outer head diameter DH is equal to or greater than 1.5 times the shaft diameter DS (DH ≥ 1.5 x DS).

In Fig. 1, the rivet 22 is shown after having been punched through the workpiece arrangement 16. The shaft length LS is larger than a workpiece length (thickness) LW in the axial direction L, so that a part of the shaft 26 protrudes from the second side 16b of the workpiece arrangement 16, particularly the part which includes the radial recess (s) 28.

The punch rivet arrangement 20 further includes a collar which could also be termed "retaining ring". The collar 40 includes a tubular portion 42 which has a central axial through-hole into which the protruding part of the shaft 26 can be inserted. The collar 40 together with the rivet 22 may be called a "self-piercing lockbolt". The collar 20 preferably includes a flange portion 44 which is an annular portion projecting radially from the tubular portion 42. The flange portion 44 defines a support surface 46 for contacting the second side 16b of the workpiece arrangement 16. In an alternative embodiment, the collar 40 does not have a flange portion, and the support surface 46 is formed by an axial end face of the tubular portion 42 (cf. Fig. 18).

Further, the collar 40 includes a ring portion 48 which is also an annular portion projecting radially from the tubular portion 42. The ring portion 48 is arranged at an axial distance from the flange portion 44. Particularly, an axial gap portion 50 is provided between the flange portion 44 and the ring portion 48. The flange portion 44 has an axial flange portion length LF. The ring portion 48 has an axial ring portion length LR. The axial gap portion 50 has an axial gap length LG. Preferably, the axial gap length LG is larger than 0.5 times the axial flange portion length LF and/or larger than 0.5 times the axial ring portion length LR. Preferably, the axial gap length LG is larger than the axial flange portion length LF and/or preferably larger than the axial ring portion length LR. In case of a collar without flange portion, the axial gap length LG' extends from the ring portion 48 to an axial end of the tubular portion 42 (cf. Fig. 18).

The collar 40 has a total collar length LC, wherein it is preferred if the total collar length LC is greater than or equal to the sum of the axial flange portion length LF, axial gap length LG, axial ring portion length LR (LC ≥ LF + LG + LR). In other words, it is preferred if the tubular portion 42 has a projection portion 52 which axially projects with respect to the ring portion 48.

The projection portion 52 has a projection portion length LP which can be smaller than the axial ring portion length LR, but can be also larger than the axial ring portion length LR, as is shown for example in Fig. 2.

The projection portion length LP may, however, be also 0 or smaller than 0 (negative), in some cases.

The collar 40 has a collar inner diameter DCi which is preferably slightly larger than or has the same diameter as the shaft diameter DS. Further, the collar 40 preferably has a collar outer diameter DCo which is defined by the flange portion 44 and/or by the ring portion 48.

The flange portion 44 has a flange portion diameter DF. The tubular portion 42 has, in the area of the axial gap portion 50, a tubular portion outer diameter DT. The ring portion 48 has a ring portion outer diameter DR. The ring portion outer diameter DR is preferably greater than the tubular portion outer diameter DT (DR > DT), and the flange portion diameter DF is preferably greater than the tubular portion outer diameter DT (DF > DT).

The ring portion 48 has a contact surface 54 which faces away from the flange portion 44. As is shown in Fig. 1, the contact surface 54 is configured to be engaged axially by a first engagement surface 56 of the die 14.

During the punching process of punching the shaft 26 of the rivet 22 through the workpiece arrangement 16, the collar 40 supports the workpiece arrangement 16 at its second side 16b, and the collar 40 itself is axially supported by the die 14 through the engagement between the surfaces 44, 56. The surfaces 44, 56 are preferably surfaces that arranged at an angle in a range between 60° and 120° with respect to the longitudinal axis, and are preferably arranged perpendicular with respect to the longitudinal axis L. The support surface 46 is typically arranged perpendicular with respect to the longitudinal axis L.

As is shown in Fig. 1, the die 14 comprises a second engagement surface 58 for engaging the collar 40. The second engagement surface 58 is axially offset from the first engagement surface 56. Further, the collar 40 and/or the die 14 is/are configured such that the collar 40 does not come into contact with the second engagement surface 58 when the first engagement surface 56 contacts the contact surface 54, as is shown in Fig. 1 (provided that, as is discussed below, the ring portion 48 is not yet separated from the remaining collar).

The second engagement surface 58 is, as is shown in Fig. 1, a conical or an arcuate surface which has a contour starting from an upper swaging surface larger diameter DA and tapers down via the conical or arcuate shape to a swaging surface smaller diameter DI. DI <DA.

In Fig. 1, the punch rivet arrangement 20 is shown in an intermediate state during the joining process, namely after the shaft 26 has been punched through the workpiece arrangement and has been inserted into the axial opening of the collar 40, wherein the collar 40 is supported on the die via the first engagement surface 56.

In this stage of the joining process, the axial force provided by the punch 12 is increased, so that the ring portion 48 is separated from the tubular portion 42 at a predetermined separation portion 60. The predetermined separation portion 60 is approximately a cylindrical portion corresponding to the tubular portion diameter DT. Therefore, the separated ring portion will be displaced after its separation from the remaining collar in an axial direction toward the flange portion 44. This allows the rivet 22 and the workpiece arrangement 16 to approach the die 14, so that the lower part of the collar 40 comes into contact with the second engagement surface 58. Due to the reduction in diameter (from DA to DI), an axial swaging force of the punch 12 is at least partly converted into a radial swaging force which acts on the remaining collar so as to press the material thereof into the radial recesses 28 of the shaft 26.

The punch rivet tool 10, the punch rivet arrangement 20, the die 14 and the joining method performed with these components, will be described below in more detail, wherein identical or similar elements are shown with identical reference numerals. Therefore, only the differences or details with respect to the above description will be explained below.

Figs. 2 to 5 show different stages of the joining method.

In a first stage as shown in Fig. 2, the second axial (lower) side 16b of a workpiece arrangement 16 consisting of at least two workpieces 18a (upper) and 18b (lower) is placed on the support surface 46 of the collar 40 which itself has been placed on the die 14 so that the contact surface 54 comes into contact with the first engagement surface 56. A blank holder 72 of the punch rivet tool 10 is pressed on the first (upper) side 16a of the workpiece arrangement 16. The rivet 22 is inserted into the punch rivet tool 10 and is placed with its shaft end surface 34 (not depicted in Fig. 2) on the first side 16a.

In addition, the punch 12 is placed on the head 24 of the rivet 22.

In this stage, the workpiece arrangement 16 is clamped between the collar 40 and the blank holder 72. An adhesive or a sealant may or may not be introduced between the individual workpiece 18a, 18b.

The rivet head 24 has a first axial position x1 with respect to the die 14.

Fig. 3 shows a next step of the joining process. Namely, a punch force FP is applied to the head of the rivets 22 via the punch 12, so that the shaft 26 of the rivet 22 is punched through the workpiece arrangement. Particularly, the shaft 26 punches a punching slug 74 (consisting of parts of the upper and lower workpieces 18a, 18b) through the collar 40 and through an ejection opening of the die 14 in the axial direction. Thereafter, as shown in Fig. 3, the head 24 is at a second axial position x₂ which is closer to the die 14 than the first axial position x₁.

During the punching step, an inner diameter opening of the flange portion 44 acts as a cutting edge C1 of the collar 40. During this process, the collar 40 does not come into contact with the second engagement surface 58.

Fig. 4 shows another phase of the joining the process. Here, the head 24 of the rivet 22 has reached a position x₃, in which the head underside surface 32 lies flat upon the first side 16a of the workpiece arrangement 16. Furthermore, the ring portion 48 has been separated from the tubular portion 44, therefore forming a separated (severed) ring portion 48'. The separation of the ring portion 48 from the collar 40 is assisted by a cutting edge C2 which is formed by an inner periphery of the first engagement surface 56, as is shown in Fig. 4.

The step of severing the separated ring portion 48' from the remaining collar 40' has been achieved by increasing the axial force provided by the punch 12 (or provided by the punch 12 and a hold-down device or blank holder (not represented)) to a modification force FM. Fig. 4 shows a situation where the separated ring portion 48' slides axially on the tubular portion in the direction toward the flange portion 44, thereby reducing the axial gap length, as is shown at LG'. After the ring portion has been separated from the collar 40, the remaining collar 40' was allowed to intrude further into the die 14, so that a lower portion of the remaining collar 40' (e.g. the projection portion 52') has come into contact with the second engagement surface 58 and has begun to being swaged. Thereby, material of the remaining collar 40' has started to flow radially into the radial recesses of the shaft 26.

Fig. 5 shows the finalized joint, in which the head 24 of the rivet is in an axial position x₄ which is closer to the die 14 than the axial position x₃ of Fig. 4. In fact, the separated ring portion 48' has been pressed against the underside of the flange portion 44, and a greater part of the remaining collar 40' has been deformed by the contact to the second engagement surface 58, so that the radial recess (s) is fully filled with material of the remaining collar, as is shown at 52" in Fig. 5.

The modification force FM which was necessary to separate the ring portion 48 from the tubular portion 42 was reduced at this stage, and thereafter, an axial swaging force FSa was applied by the punch 12 (or applied by the punch 12 and a hold-down device or blank holder (not represented)) to the rivet 22, thereby further forcing the remaining part of the collar into the die 14. The axial swaging force FSa is at least partially converted into a radial swaging force FSr by the second engagement surface 58 thereby radially swaging the collar (e.g. projection portion) to as to form the deformed projection portion 52". During this process, the conical or arcuate second engagement surface 58 has converted at least part of the axial swaging force FSa to the radial swaging force FSr so as to force material of the remaining collar 40' into the recess 28.

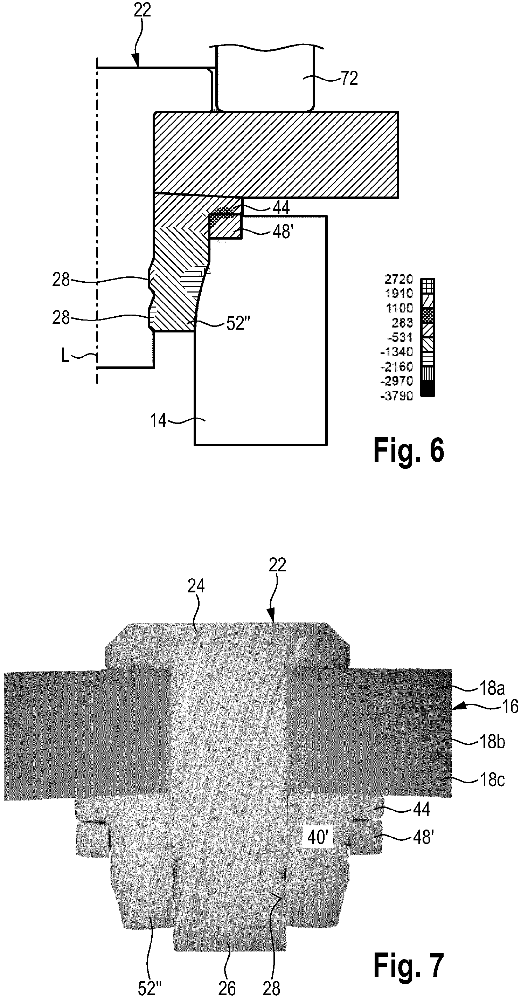

Fig. 6 shows a schematic view of a part of the completed joint using a punch rivet arrangement 20, wherein stresses are shown when the maximum axial swaging force FSa is applied in the completed joint (corresponding to position x4). It can be seen that the stresses are more or less limited to the deformed projection portion 52", and only minor stresses can be found at an edge of engagement between the separated ring portion 48' and the flange 44.

Fig. 7 shows a micrograph of the completed joint, wherein the workpiece arrangement 16 includes three workpieces 18a, 18b, 18c.

Here, the second engagement surface 58 was more or less conical so that the deformed projection portion 52" has a conical shape on its outer periphery.

It can be clearly seen that material of the remaining collar 40' has entered the radial recess 28 of the rivet 22.

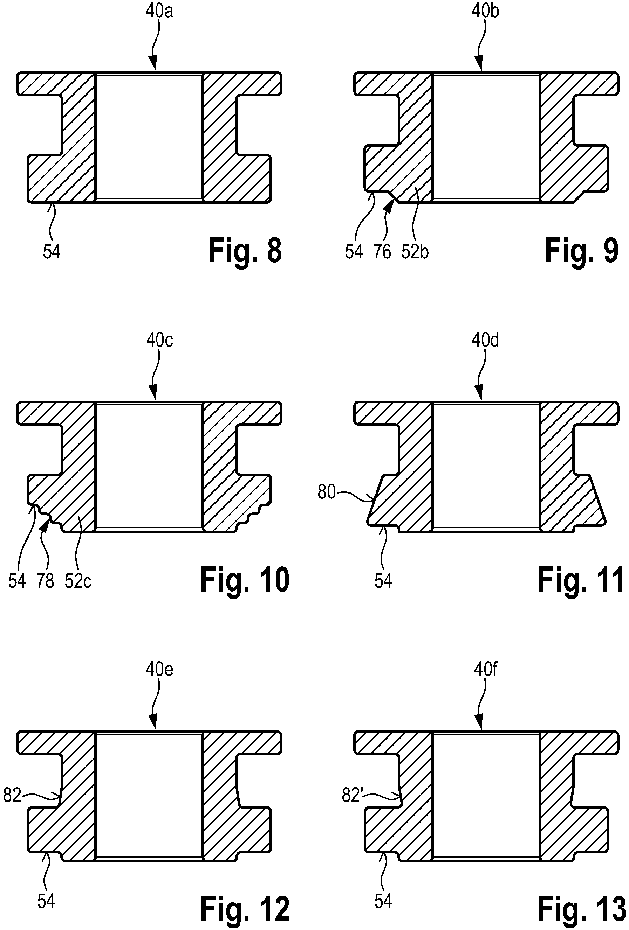

In Figs. 8 to 13, alternative embodiments of collars 40 are shown. The collar 40a of Fig. 8 is more or less identical to the collar 40 of Fig. 1, wherein, however, there is no dedicated projection portion (projection portion length LP = 0).

Fig. 9 shows a collar 40b wherein a transition between the contact surface 44 and the lower surface of the projection portion 52b is formed by a conical transition surface 76.

Fig. 10 shows a collar 40c, wherein a stepped transition surface 48 is provided between the contact surface 54 and the projection portion 52c.

Fig. 11 shows a collar 40d, wherein an outer periphery of the ring portion 48 is formed by a conical outer ring surface 80.

Fig. 12 shows a collar 40e, wherein an outer peripheral surface of the tubular portion in the axial gap portion is formed partially by a conical gap surface 82. In Fig. 12, the conical gap surface 82 becomes larger in the direction toward the contact surface. In Fig. 13, a collar 40f is shown, wherein the diameter of the conical gap surface 82' becomes smaller toward the contact surface 54.

In Fig. 14(a), 14(b), 14(c), 15(a), 15(b), and 15(c), alternative embodiments of the rivet 22 are shown.

In Fig. 14(a), a rivet 22a is shown, wherein the head includes a conical upper head surface 86 connecting the head top surface 30 to an outer peripheral surface of the head 24.

Fig. 14(b) shows a rivet 22b, wherein the head underside surface 32 is formed as a conical lower head surface 88.

Fig. 14(c) shows a rivet 22c, in which a conical lower head surface 88' is formed, which has a smaller angle with respect to the longitudinal axis L than the conical lower head surface 88 of Fig. 14(b).

Fig. 15(a) shows a rivet 22d, wherein a longitudinal blind hole is provided in the rivet, having an opening at the head top surface 30 and a bottom surface in middle portion of the shaft 26.

Fig. 15(b) shows a similar embodiment, wherein a rivet 22e has a conical blind hole 92 which has a larger diameter at the head top surface 30 than at its bottom surface.

Fig. 15(c) shows a rivet 22f having a conical head blind hole 94 which has an axial depth corresponding to the head length LH.

In Fig. 16(a), 16(b), and 16(c), alternative embodiments of dies are shown.

In Fig. 16(a), a die 14(a) is shown which includes a conical intermediate die surface 98 between the first engagement surface 56 and the second engagement surface 58. The conical intermediate die surface 98 has a smaller diameter close to the first engagement surface 56, and a larger diameter close to the second engagement surface 58.

Fig. 16(b) shows another die 14b, wherein a conical intermediate die surface 98' between the first engagement surface 56 and the second engagement surface 58 is formed such that the diameter at the first engagement surface 56 is larger than the diameter adjacent to the second engagement surface 58.

Fig. 16(c) shows a die 14c in which the die has a conical opening die surface 100, which allows to more easily introduce the ring portion 48 into the die and onto the first engagement surface 56, and which centers the ring portion 48 with respect to the die 14c.

Fig. 17 shows a graph of joining force in [kN] versus machine stroke in [mm], and shows approximately the axial positions x₁, x₂, x₃, x₄ which are shown in Fig. 2, Fig. 3, Fig. 4, and Fig. 5. After the situation shown in Fig. 2, the axial force (joining force) is increased to a punch force FP, until the rivet shaft 26 has been punched through the workpiece arrangement, as is shown at x₂. The joining force continues to be reduced until the head 24 of the rivet 22 contacts the upper surface 16a of the workpiece arrangement 16, which is shown at c in Fig. 17. Thereafter, the axial joining force is increased to a modification force FM which is significantly higher than the punch force FP. When the modification force FM is reached, the ring portion 48 shears off the collar 40, so that the joining force briefly reduces until the collar 40 comes into contact with the second engagement surface 58. Thereafter, the joining force is increased again as is shown at x₃ (corresponding to Fig. 4), and finally to a final swaging force FSa until the joint is completed at approximately x₄. Then, the force is reduced to zero (during this process, the elastic deformation is restored so that the machine stroke is decreased).

In Fig. 18, another alternative embodiment of a collar 40g is shown. The collar 40g of Fig. 18 is more or less identical to the collar 40 of Fig. 1, wherein, however, there is no dedicated flange portion (flange portion length LF = 0). The collar 40g comprises a support surface 46 for contacting the second side 16b of the workpiece arrangement 16, wherein the support surface 46 is formed by an axial end face of the tubular portion 42.

In this embodiment, after the separated ring portion 48' has been separated from the remaining collar 40' during the disclosed joining process, the separated ring portion 48' will be displaced axially on the tubular portion 42 of the remaining collar 40' until it abuts against the second axial side 16b of the workpiece arrangement 16.

### List of reference numerals:

- 10: punch rivet tool
- 12: punch
- 14: die
- 16: workpiece arrangement (stack)
- 16a: first side
- 16b: second side
- 18a: first workpiece
- 18b: second workpiece
- 18c: third workpiece
- 20: punch rivet arrangement
- 22: rivet (self-piercing lockbolt) (20)
- 24: head (22)
- 26: shaft (22)
- 28: recess(es)
- 30: head top surface
- 32: head underside surface
- 34: shaft end surface
- 40: collar (20)
- 40': remaining collar without separated ring portion
- 42: tubular portion
- 44: flange portion
- 46: support surface (44)
- 48: ring portion
- 48': separated (severed) ring portion
- 50: axial gap portion (42)
- 52: projection portion (42)
- 54: contact surface (40 / 48)
- 56: first engagement surface (14)
- 58: second engagement surface (14)
- 60: predetermined separation portion (48 from 42)
- 70: rivet tool
- 72: blank holder
- 74: punching slug(s)
- 76: conical transition surface
- 78: stepped transition surface
- 80: conical outer ring surface
- 82: conical gap surface
- 86: conical upper head surface
- 88: conical lower head surface
- 90: longitudinal head blind hole
- 92: conical rivet blind hole
- 94: conical head blind hole
- 98: conical intermediate die surface
- 100: conical opening die surface

- C1: cutting edge of collar
- C2: cutting edge of die
- DA: swaging surface larger diameter
- DCi: collar inner diameter
- DCo: collar outer diameter
- DF: flange portion diameter
- DH: head diameter
- DI: swaging surface smaller diameter
- DR: ring portion diameter
- DS: shaft diameter
- DT: tubular portion diameter
- FM: modification force (separating force)
- FP: punch force
- FSr: axial swaging force
- FSr: radial swaging force
- L: longitudinal axis
- LC: collar length
- LF: flange portion length
- LG: gap length
- LH: head length
- LP: projection portion length
- LR: ring portion length
- LS: shaft length
- LW: workpiece length (thickness)

## Claims

1. A method for joining at least two workpieces (18₁, 18₂) using a punch rivet arrangement (20), the punch rivet arrangement (20) comprising a rivet (22) and a collar (40), wherein the rivet (22) has at least one radial recess (28), comprising the steps of:
- placing the rivet (22) on a first side (16₁) of the workpieces which form a stacked workpiece arrangement (16);
- placing the collar (40) on a die (14) arranged on a second side (16₂) of the workpiece arrangement (16),
- punching the rivet (22) with a punch force (FP) through the workpiece arrangement (16) in an axial direction (L), wherein the workpiece arrangement (16) is supported by a support surface (46) of the collar (40), and wherein the collar (40) is supported by a first engagement surface (56) of the die (14); and
- modifying the collar (40) by applying a modification force (FM) to the collar (40),
wherein the modification force (FM) is higher than the punch force (FP), and
wherein the modification of the collar (40) allows a second engagement surface (58) of the die (14) to apply a radial swaging force (FSr) onto the collar (40) so that material of the collar (40) flows into the at least one radial recess (28) of the rivet (22).

2. The method of claim 1, wherein the modification force (FM) is applied to the collar (40) via the first engagement surface (56) of the die (14).

3. The method of claim 1 or 2, wherein the first engagement surface (56) forms an angle with respect to the axial direction (L) in a range between 60° and 120°, and preferably is perpendicular to the axial direction (L).

4. The method of any one of claims 1 to 3, wherein the second engagement surface (58) of the die (14) is a conical or arcuate surface and/or wherein the second engagement surface (58) is configured to convert a part of an axial swaging force (FSa) into the radial swaging force (FSr) which acts radially on the collar (40) so that material of the collar (40) flows radially into the radial recess (28) of the rivet (22).

5. The method of any one of claims 1 to 4, wherein the rivet (22) has a head (24) and a shaft (26) axially extending from the shaft (24), wherein the shaft is punched through the workpiece arrangement (16), and wherein the at least one radial recess (28) is provided on the shaft (26).

6. The method of any one of claims 1 to 5, wherein the modification of the collar (40) by means of the modification force (FM) includes separating the collar (40) into two collar pieces (40', 48').

7. The method of claim 6, wherein the collar (40) comprises a tubular portion (42) for receiving a shaft (26) of the rivet (22), and a ring portion (48) which extends radially from the tubular portion (42), wherein the modification force (FM) is applied to a contact surface (54) of the ring portion (48) so that the ring portion is separated from the tubular portion (42) and is displaced axially on the tubular portion (42) of the remaining collar (40').

8. The method of claim 7, wherein the collar (40) comprises a flange portion (44) which is connected to the tubular portion (42) and which includes a support surface (46) for supporting the workpiece arrangement (16) when being punched through by the rivet (22), and wherein the ring portion (48) is preferably pressed against the flange portion (44) after having been separated from the tubular portion (42).

9. The method of any one of claims 6 to 8, wherein the separation of the collar (40) allows the second engagement surface (58) of the die (14) to engage a radially swageable part of the collar (40).

10. A punch rivet arrangement (20), particularly for use in the method of any one of claims 1 to 9, comprising a rivet (22) and a collar (40), wherein the rivet (22) comprises a shaft (26) with at least one radial recess (28) and extends in an axial direction (L), wherein the collar (40) has a contact surface (54) for contacting a die (14) of a punch rivet tool (10), wherein the collar (40) has a support surface (46) for supporting a workpiece arrangement (16), and wherein the collar (40) has a swageable portion,
- wherein the shaft (26) is configured to be punched through the workpiece arrangement (16),
- wherein the collar (40) is configured to receive a part of the shaft (26),
- wherein the collar (40) is configured to be modified by applying a modification force (FM) to the contact surface (54), and
- wherein the swageable portion of the collar (40) is configured to be swaged by a radial swaging force (FSr).

11. The punch rivet arrangement (20) of claim 10, wherein the support surface (46) is arranged on one axial side of the of the contact surface (54), and wherein the swageable portion is arranged on an opposite axial side of the contact surface (54).

12. The punch rivet arrangement (20) of claim 10 or 11, wherein the collar (40) has a tubular portion (42) extending essentially along the axial direction (L), and preferably a flange portion (44) extending from the tubular portion (42), wherein the support surface (46) is preferably formed on the flange portion (44).

13. The punch rivet arrangement (20) of any one of claims 10 to 12, wherein the collar (40) has a tubular portion (42) extending essentially along the axial direction (L), and a ring portion (48) extending from the tubular portion (42), wherein the contact surface (54) for contacting the die (14) is formed on the ring portion (48).

14. The punch rivet arrangement (20) of 13, wherein the ring portion (48) is configured to be separated from the tubular portion (42) when a modification force (FM) is applied to the contact surface (54).

15. A die (14) for a punch rivet arrangement (20) of any one of claims 10 to 14,
wherein the die (14) comprises a radially extending first engagement surface (56) for engaging a radially extending contact surface (54) of a collar (40) of the punch rivet arrangement (20), and a second engagement surface (58) which is arranged axially offset from the first engagement surface (56) and which has a conical or arcuate shape so that the second engagement surface (58) is configured to not engage the contact surface (54) of the collar (40) but to engage another surface of the collar (40) so as to apply a radial swaging force (FSr) to the collar (40).

16. Punch rivet tool (10) for a punch rivet arrangement (20) of any one of claims 10 to 14, comprising
- a punch (12) configured for engaging a rivet (22) of the punch rivet arrangement (20) in an axial direction (L) for punching a shaft (26) of the rivet (22) through a workpiece arrangement (16), and
- a die (14) according to claim 16.
